# EUROPÄISCHE PATENTSCHRIFT

(11) **EP 4 478 727 B1**
(45) Veröffentlichungstag und Bekanntmachung des Hinweises auf die Patenterteilung: **14.05.2025**
(21) Anmeldenummer: 23178986.8
(22) Anmeldetag: 13.06.2023
(51) Int. Cl.: H04N 23/54, H04N 23/56, H04N 25/443, H04N 25/705, H04N 25/68, H04N 25/773, G01S 7/497, G01S 17/08, G01S 7/4863, G01S 7/4865, G01S 17/10

(54) **VERFAHREN ZUR KONFIGURATION EINES OPTOELEKTRONISCHEN SENSORS**
METHOD FOR CONFIGURING AN OPTOELECTRONIC SENSOR
PROCÉDÉ DE CONFIGURATION D'UN CAPTEUR OPTOÉLECTRONIQUE

(43) Veröffentlichungstag der Anmeldung: 18.12.2024
(73) Patentinhaber: SICK AG, 79183 Waldkirch (DE)
(72) Erfinder: Kettel, Johannes, 79211 Denzlingen (DE); Hager, Eiko, 79211 Denzlingen (DE)

(56) Entgegenhaltungen:
- EP-B1- 3 428 683

## Beschreibung

Die Erfindung betrifft ein Verfahren zur Konfiguration eines optoelektronischen Sensors nach dem Oberbegriff von Anspruch 1.

Für den Lichtempfänger eines optoelektronischen Sensors wird in vielen Anwendungen ein interessierender Bereich gesetzt (ROI, region of interest). Dafür wird in der typischerweise matrixförmigen Anordnung von Lichtempfangselementen ein Teilbereich ausgewählt. In der Bildverarbeitung ist das ein verbreitetes Konzept, um die Datenmenge zu reduzieren. Bei einem tastenden Sensor, der einen Lichtstrahl aussendet und wieder empfängt, kann ein interessierender Bereich so gesetzt werden, dass der von dem Lichtstrahl erzeugte Lichtfleck erfasst ist. Lichtempfangselemente, die von dem Lichtfleck nicht getroffen sind, würden ohnehin nur Umgebungslicht und damit letztlich ein Störsignal beitragen.

Einzelne Lichtempfangselemente oder Zellen eines Lichtempfängers können defekt sein oder unerwünschte Eigenschaften aufweisen, zum Beispiel zu lichtempfindlich ("Screamer") oder zu unempfindlich sein ("Dark Pixel"). Fallen defekte Zellen in den interessierenden Bereich, so verfälschen sie das Messergebnis. Im Rahmen einer herkömmlichen Lichtsenderjustage wird lediglich sichergestellt, dass der Lichtfleck auf den Lichtempfänger fällt. Ob dabei defekte Zellen getroffen werden, wird nicht geprüft und ist angesichts der statistischen Verteilung der Positionen defekter Zellen auch nicht vorhersagbar. Bei zu vielen defekten Sensorzellen im Bereich des Lichtflecks beziehungsweise des interessierenden Bereichs werden die spezifizierten Sensoreigenschaften nicht erreicht, und das Gerät muss gegebenenfalls aussortiert werden.

Natürlich besteht die Möglichkeit, auf eine Fertigungstechnologie auszuweichen, bei der defekte Zellen seltener auftreten. Kosten lassen sich so aber kaum vermeiden, da die erhöhte Ausbeute mit wesentlich teureren Lichtempfängern erkauft wird. Alternativ können defekte Zellen in dem interessierenden Bereich schlicht zugelassen werden. Dann muss jedoch mit einer höheren Schwankungsbreite der Leistungsfähigkeit der Sensoren gerechnet werden. Dementsprechend sind vorsorglich alle Sensoren mit einer geringeren Leistungsfähigkeit zu spezifizieren, um einen Puffer für die Varianz vorzuhalten. Damit werden die technischen Grenzen nicht ausgeschöpft.

Um auch geringe Empfangsintensitäten nachweisen zu können, werden in manchen optoelektronischen Sensoren Lawinenphotodioden eingesetzt (APD, Avalanche Photo Diode). Das einfallende Licht löst hier einen kontrollierten Lawinendurchbruch (Avalanche Effect) aus. Dadurch werden die durch einfallende Photonen erzeugten Ladungsträger vervielfacht, und es entsteht ein Photostrom, der zu der Lichtempfangsintensität proportional, dabei aber wesentlich größer ist als bei einer einfachen PIN-Diode.

Eine noch größere Empfindlichkeit wird mit Lawinenphotodioden erreicht, die im sogenannten Geiger-Modus betrieben werden (SPAD, Single Photon Avalanche Diode). Hierbei wird die Lawinenphotodiode oberhalb der Durchbruchspannung vorgespannt, so dass bereits ein einziger, durch ein einzelnes Photon freigesetzter Ladungsträger eine nicht mehr kontrollierte Lawine auslösen kann, die dann aufgrund der hohen Feldstärke sämtliche verfügbaren Ladungsträger rekrutiert. Danach kommt die Lawine zum Erliegen (passive quenching) und steht für eine gewisse Totzeit nicht mehr zur Detektion zur Verfügung. Alternativ ist auch bekannt, die Lawine von außen zu erkennen und zu löschen (active quenching).

Eine SPAD zählt somit wie ein Geigerzähler Einzelereignisse. SPADs sind nicht nur hochempfindlich, sondern auch vergleichsweise kostengünstig und effizient in Silizium-Halbleitern zu integrieren. Weiter lassen sie sich dann mit wenig Aufwand auf einer Leiterkarte integrieren. Eine Besonderheit ist die Tatsache, dass auch ein minimales Störereignis, wie ein Fremdlichtphoton oder Dunkelrauschen, das gleiche maximale Empfangssignal erzeugt wie ein Nutzlichtsignal.

Distanzsensoren oder Entfernungstaster nach dem Lichtlaufzeitprinzip messen die Laufzeit eines Lichtsignals, die über die Lichtgeschwindigkeit der Entfernung entspricht. Man unterscheidet die pulsbasierte und die phasenbasierte Messung. In einem Pulslaufzeitverfahren wird ein kurzer Lichtpuls ausgesandt und die Zeit bis zum Empfang einer Remission oder Reflexion des Lichtpulses gemessen. Alternativ wird bei einem Phasenverfahren Sendelicht amplitudenmoduliert und eine Phasenverschiebung zwischen Sende- und Empfangslicht bestimmt, wobei die Phasenverschiebung ebenfalls ein Maß für die Lichtlaufzeit ist.

Ein auf SPADs basierender Distanzsensor arbeitet vorzugsweise pulsbasiert, um auch bei Kantentreffern oder Remissionssprüngen robuste Messungen zu gewährleisten. Das wird auch als direkte Time-of-Flight-Messung (dToF, direct Time of Flight) bezeichnet. Um trotz Störeinflüssen verlässliche Messergebnisse zu erhalten, können Ereignisse über mehrere SPADs beziehungsweise mehrere Sendepulse gesammelt und gemeinsam durch die Suche nach einem Maximum in einem Histogramm ausgewertet werden.

Aus der EP 3 428 683 B1 ist ein optoelektronischer Sensor bekannt, der mit SPADs und einem dToF-Verfahren Entfernungen misst. Dabei ist eine Schaltermatrix vorgesehen, um gezielt bestimmte SPADs zur Auswertung auszuwählen und sie dafür eins-zu-eins mit TDCs (Time-to-Digital Converter) zu verbinden. Mit den derart ausgewählten SPADs wird ein einziges gemeinsames Histogramm gesammelt. Auf die Problematik von Defekten der ausgewählten Zellen oder SPADs geht das Dokument nicht ein.

In US 8 040 406 B2 werden defekte Pixel durch Bildinformation aus der Nachbarschaft kompensiert. Die Kompensation ändert nichts daran, dass die eigentliche Information an der Position des Pixels verloren ist. Während die US 8 040 406 B2 keine interessierenden Bereiche kennt, schlägt die US 2022/0360673 A1 eine Korrektur in einer ROI vor. Zum einen basiert das aber auf Datenformaten mit Metainformationen, die ein einfacher Sensor beispielsweise zur Distanzmessung nicht verwendet. Außerdem ändert auch die Einschränkung auf eine ROI nichts daran, dass eine derartige Kompensation eine Interpolation ist, mit der ein Defekt lediglich überspielt wird. In der JP 2013 239772 A werden Bewegungen in einer ROI trotz defekter Pixel aus mehreren Bilden rekonstruiert. Das erfordert einen hohen Rechenaufwand und ist auf Mehrfachaufnahmen angewiesen. Jede Einzeldetektion wird weiterhin von den defekten Pixeln beeinflusst.

Es ist daher Aufgabe der Erfindung, die Detektion eines Sensors bei Verwendung eines interessierenden Bereichs weiter zu verbessern.

Diese Aufgabe wird durch ein Verfahren zur Konfiguration eines optoelektronischen Sensors nach Anspruch 1 gelöst. Der Lichtempfänger weist eine Vielzahl von beispielsweise zu einer Matrix angeordneten Lichtempfangselementen oder Zellen auf. Eine Steuer- und Auswertungseinheit ist mindestens mittelbar mit dem Lichtempfänger verbunden und kann dementsprechend Signale der Lichtempfangselemente oder daraus abgeleitete Informationen auslesen. Es wird eine Auswahl eines Teils der Lichtempfangselemente getroffen, um einen interessierenden Bereich zu bilden (ROI, Region of Interest). Nur die Informationen der Lichtempfangselemente des interessierenden Bereichs werden in der Steuer- und Auswertungseinheit weiter ausgewertet, vorzugsweise überhaupt nur diese Informationen aus dem Lichtempfänger ausgelesen. Informationen der Lichtempfangselemente außerhalb des interessierenden Bereichs werden also spätestens in der Auswertung ignoriert. Das kann eine bestimmte Funktion des Sensors betreffen, für die ein interessierender Bereich ausgewählt wird, oder vorzugsweise wird der Lichtempfänger in dem Sinne auf den interessierenden Bereich begrenzt, dass die übrigen Lichtempfangselemente nach abgeschlossener Konfiguration, jedenfalls funktionell betrachtet, als inaktiv angesehen werden können. Der interessierende Bereich kann zusammenhängend sein, insbesondere in einfacher geometrischer Form wie ein Rechteck, ein Kreis oder eine Linie, muss dies aber nicht, wie im Falle mehrerer separater geometrischer Formen, etwa zweier Rechtecke oder Kreise, oder eines Gitters über zumindest einen Teilbereich des Lichtempfängers.

Die Erfindung geht von dem Grundgedanken aus, den interessierenden Bereich so auszuwählen, dass daraus defekte Lichtempfangselemente jedenfalls bis auf eine tolerierte Höchstanzahl ausgeschlossen werden. Dazu werden die defekten Lichtempfangselemente zunächst ermittelt. Als defekt gilt ein Lichtempfangselement insbesondere, wenn es ein Signal unabhängig vom Lichteinfall liefert oder zu empfindlich beziehungsweise zu unempfindlich auf Lichteinfall reagiert ("Stuck-At", "Screamer", "Dark Pixel"). Der interessierende Bereich wird dann so gelegt oder verschoben, dass allenfalls eine Höchstanzahl von defekten Lichtempfangselementen für den interessierenden Bereich ausgewählt ist, die defekten Lichtempfangselemente also in der Auswahl der Lichtempfangselemente für den interessierenden Bereich vermieden werden. Anschaulich gesprochen wird der interessierende Bereich in einen intakten, von defekten Lichtempfangselementen nicht beeinträchtigten Bereich des Lichtempfängers gelegt. Die noch zulässige Höchstanzahl defekter Lichtempfangselemente, die in Kenntnis der Größe des interessierenden Bereichs unmittelbar einem Höchstanteil entspricht, ist ein wählbarer Parameter.

Die Ausführung der angegebenen Verfahrensschritte erfolgt automatisiert, vorzugsweise in dem Sensor und/oder einem angeschlossenen Konfigurations- beziehungsweise Diagnosegerät. Damit kann eine Anweisung verbunden sein, den Sensor zu verändern, vorzugsweise während der Herstellung des Sensors, beispielsweise den Lichtempfänger zu verschieben oder an einem mit der Anweisung spezifizierten Ort zu platzieren. Dem kann dann ein wieder gänzlich automatisierter Schritt folgen, der die Ausführung der Anweisung verifiziert und dafür insbesondere prüft, ob jetzt die Auswahl eines interessierenden Bereichs mit allenfalls der Höchstanzahl von defekten Lichtempfangselementen möglich ist.

Die Erfindung hat den Vorteil, dass durch geeignete Auswahl eines interessierenden Bereichs ein Sensor trotz defekter Lichtempfangselemente voll funktionsfähig bleiben kann. Das erhöht den Anteil an Sensoren, die den Anforderungen an eine Detektionsaufgabe gewachsen sind, insbesondere die Ausbeute (Yield) während der Herstellung. Dabei ist nicht länger erforderlich, die spezifizierte Leistungsfähigkeit künstlich zu beschneiden, um ein konsistentes Verhalten über alle Sensoren hinweg gewährleisten zu können. Es hängt nicht mehr von der statistischen Verteilung defekter Lichtempfangselemente ab, wie viele defekte Lichtempfangselemente sich in dem interessierenden Bereich befinden, es ist umgekehrt der interessierende Bereich so gelegt, dass solche statistischen Fehler ausgeglichen sind. Statistische Ausreißer mit einer ungewöhnlich hohen Anzahl und/oder ungewöhnlich ungünstigen Verteilung defekter Lichtempfangselemente bleiben möglich, dies aber nur noch mit einem ungleich günstigeren Quantil an auszusortierenden Geräten.

Der interessierende Bereich wird vorzugsweise derart ausgewählt, dass der interessierende Bereich keine defekten Lichtempfangselemente umfasst. Hier wird eine besonders scharfe Bedingung formuliert, die hinsichtlich defekter Lichtempfangselemente in dem interessierenden Bereich gar keine Toleranz zulässt. Damit ist stets die gleiche, volle Funktionsfähigkeit über alle konfigurierten Sensoren hinweg gewährleistet. Hinsichtlich der Ausbeute (Yield) kann eine so scharfe Forderung aufgestellt werden, weil es weitgehend nicht mehr vom Zufall abhängt, ob eine entsprechend geringe Anzahl defekter Lichtempfangselemente vorliegt. Im Gegenteil darf der Lichtempfänger durchaus Defekte aufweisen, denen erfindungsgemäß ausgewichen wird.

Die Auswahl des interessierenden Bereichs erfolgt vorzugsweise im Rahmen der Herstellung des Sensors. Die Festlegung des interessierenden Bereichs kann allgemein im Rahmen einer Konfiguration, beispielsweise einer Inbetriebnahme vor Ort erfolgen. Gemäß dieser Ausführungsform ist dies jedoch bereits Teil der Herstellung, das Verfahren zur Konfiguration eines optoelektronischen Sensors wird damit zu einem Verfahren zur Herstellung eines optoelektronischen Sensors, bei dem die Auswahl des interessierenden Bereichs ein Herstellungsschritt ist. Sollte kein interessierender Bereich mit allenfalls der Höchstanzahl von defekten Lichtempfangselementen auswählbar sein, so wird der Sensor verworfen oder gegebenenfalls noch als Sensor mit einer geringeren spezifizierten Leistungsfähigkeit vermarktet.

Die defekten Lichtempfangselemente werden bevorzugt während der Erfassung eines Referenzobjekts mit dem Sensor ermittelt. Dank des Referenzobjekts, dessen Remissionseigenschaften festliegen, gibt es eine Erwartungshaltung für die jeweiligen Signale der Lichtempfangselemente. Diese können als Daten für das verwendete Referenzobjekt vorgegeben sein, oder es wird für ein jeweiliges Lichtempfangselement eine Erwartungshaltung durch Vergleich mit den jeweilen benachbarten Lichtempfangselementen geschaffen. Als Referenzobjekt gilt vorzugsweise auch eine definierte Ausleuchtung beziehungsweise Dunkelheit im Erfassungsbereich, die ebenfalls ein Referenzszenario schafft, ohne dass unmittelbar ein spezielles Referenzobjekt erfasst wird.

Der Sensor weist bevorzugt einen Lichtsender auf, dessen Sendelicht einen Lichtfleck auf dem Lichtempfänger erzeugt, wobei der interessierende Bereich so ausgewählt wird, dass der Lichtfleck auf Lichtempfangselemente des interessierenden Bereichs fällt. Diese Ausführungsform betrifft die große Klasse tastender optoelektronischer Sensoren, die einen Reflex ihres eigenen Sendelichts auswerten. Dabei sind dann interessierender Bereich und Lichtfleck aneinander gebunden und können in gewisser Weise synonym verstanden werden. Vorzugsweise ist der interessierende Bereich auf den Lichtfleck zentriert. Es sind verschiedene Überlappungsgrade von interessierendem Bereich und Lichtfleck möglich, insbesondere ein vollständiger Überlapp, bei dem der interessierende Bereich genau die von dem Lichtfleck beleuchteten Lichtempfangselemente umfasst. Denkbar sind jedoch auch zumindest einige von dem Lichtfleck beleuchtete Lichtempfangselemente, die nicht zu dem interessierenden Bereich gehören, oder umgekehrt ein etwas zu großer interessierender Bereich mit zumindest einigen Lichtempfangselementen, die der Lichtfleck nicht trifft.

Bevorzugt wird eine Lichtfleckposition auf dem Lichtempfänger verschoben, indem der Lichtsender, eine Sendeoptik des Lichtsenders, der Lichtempfänger und/oder eine Empfangsoptik des Lichtempfängers bewegt wird. Das sind mechanische Maßnahmen, um eine neue Lichtfleckposition zu erzielen, sofern es in der Umgebung der früheren Lichtfleckposition zu viele defekte Lichtempfangselemente gibt. Die entsprechenden Komponenten werden verschoben oder verkippt, insbesondere im Rahmen der Herstellung noch vor der Fixierung, wie etwa einem Klebeprozess. Der interessierende Bereich ist in seiner Funktion an den Lichtfleck gebunden und kann daher nicht sinnvoll unabhängig von der Lichtfleckposition verändert werden. Ohne Veränderung der Lichtfleckposition könnte zwar der interessierende Bereich defekte Lichtempfangselemente vermeiden, würde aber den Lichtfleck nicht mehr oder jedenfalls nicht mehr vollständig erfassen.

Aus den ermittelten defekten Lichtempfangselementen wird vorzugsweise eine Defektkarte des Lichtempfängers mit hervorgehobenen Positionen der defekten Lichtempfangselemente erzeugt. Die Defektkarte ist beispielsweise eine Matrix entsprechend der Anordnung der Lichtempfangselemente des Lichtempfängers. Die Einträge der Defektkarte lassen in einer beliebig festgelegten Codierung erkennen, ob das Lichtempfangselement an dieser Position defekt ist oder nicht, gegebenenfalls mit näherer Information zur Art des Defekts. Damit ermöglicht die Defektkarte einen schnellen Zugriff auf alle relevanten Informationen zu den defekten Lichtempfangselementen.

Die Defektkarte wird bevorzugt mit einer ROI-Karte entsprechend einer Form des interessierenden Bereichs zu einer Überlappungskarte gefaltet. Die ROI-Karte ist eine kleinere Karte als die Defektkarte und gibt die gewünschte Anordnung von Lichtempfangselementen des interessierenden Bereichs an. Beispielsweise handelt es sich um eine Matrix mit den Abmessungen des interessierenden Bereichs. Durch Faltung der ROI-Karte mit der Defektkarte entsteht eine Überlappungskarte. Aus der Überlappungskarte kann für jede Position abgelesen werden, wie viele defekte Lichtempfangselemente sich in einem an dieser Position angeordneten interessierenden Bereich befinden würden.

Die ROI-Karte weist bevorzugt eine Pufferzone um den interessierenden Bereich auf. Die ROI-Karte ist also in zumindest eine Richtung, vorzugsweise in mehrere oder alle Richtungen, etwas größer als der eigentliche interessierende Bereich. Das sorgt für eine größere Robustheit gegenüber Fertigungstoleranzen beispielsweise eines Klebeprozesses, der die relativen Positionen innerhalb des Sensors fixiert. Sofern die Verschiebungen kleiner bleiben als die Ausdehnung der Pufferzone, gelangen defekte Lichtempfangselemente aufgrund der Toleranzen zunächst nur in die Pufferzone, aber noch nicht in den interessierenden Bereich. Vollständig kann die Pufferzone solche Toleranzen nur abfangen, wenn sie großzügig genug ausgelegt wird. Die Pufferzone wird vorzugsweise in der Faltung gemäß dem vorangehenden Absatz so berücksichtigt, dass erkennbar bleibt, ob ein defektes Lichtempfangselement mit dem interessierenden Bereich oder der Pufferzone überlappt. Dadurch kann später besser optimiert werden, denn ein defektes Lichtempfangselement in der Pufferzone ist meist eher hinnehmbar als in dem interessierenden Bereich selbst.

Positionen der Überlappungskarte werden bevorzugt mit einem Defektmaß bewertet, wobei das Defektmaß einen Wert je nach Überlappung der ROI-Karte mit defekten Lichtempfangselementen annimmt. Positionen ohne Überlappung mit defekten Lichtempfangselementen sind besonders günstig und haben daher ein geringes Defektmaß. Jedes defekte Lichtempfangselement, das in einem interessierenden Bereich an der betrachteten Position liegen würde, erhöht das Defektmaß. Der Beitrag für ein defektes Lichtempfangselement in einer Pufferzone zu dem Defektmaß bleibt vorzugsweise geringer.

Der interessierende Bereich wird bevorzugt so ausgewählt, dass das Defektmaß für die Positionen der Lichtempfangselemente des interessierenden Bereichs ein Höchstdefektmaß nicht überschreitet. Im Idealfall bleibt das Defektmaß Null, der interessierende Bereich enthält dann gar kein defektes Lichtempfangselement. Es hängt von dem Sensor und dessen Anwendung ab, ob ein schlechteres Höchstdefektmaß zugelassen werden kann. Es ist denkbar, dass der Lichtempfänger aufgrund zu vieler defekter Lichtempfangselemente und/oder deren ungünstiger Verteilung keine passende Position bietet. Dann ist eine Konfiguration nicht möglich, der Sensor muss aussortiert oder mit schlechterer Leistungsfähigkeit betrieben werden, die dann aber im Gegensatz zum Stand der Technik bekannt ist und spezifiziert werden kann. Umgekehrt kann es mehrere geeignete Positionen geben, unter denen dann zufällig oder nach weiteren Kriterien entschieden wird, beispielsweise einer möglichst geringen erforderlichen Veränderung des Sensors. Die numerischen Konventionen für das Defektmaß sind wählbar. Insbesondere ist ohne Beschränkung der Allgemeinheit angenommen, dass ein günstiges Defektmaß klein bleibt, eine invertierte Konvention mit einem hohen günstigen Defektmaß führt letztlich zu den gleichen Ergebnissen.

Das Defektmaß ist bevorzugt an Positionen innerhalb eines vorgegebenen Bereichs des Lichtempfängers herabgesetzt. Dieser vorgegebene Bereich ist eine Präferenz für Wunschpositionen auf dem Lichtempfänger, die von außen festgelegt ist. Das Defektmaß ist dort vorzugsweise nur geringfügig herabgesetzt, um Defekte höher zu priorisieren als diese Vorgabe. Allerdings ist auch der umgekehrte Fall mit einer erheblichen Herabsetzung des Defektmaßes vorstellbar. Der vorgegebene Bereich soll dann womöglich unter allen Umständen eingehalten werden, auch auf die Gefahr hin, dass sich defekte Lichtempfangselemente in dem interessierenden Bereich befinden oder kein passender interessierender Bereich gefunden wird, obwohl außerhalb des vorgegebenen Bereichs ein interessierender Bereich mit keinen oder weniger defekten Lichtempfangselementen möglich gewesen wäre.

Das Defektmaß weist bevorzugt einen Anteil auf, der von einem Abstand der jeweils mit dem Defektmaß bewerteten Position zu einer Ursprungsposition des interessierenden Bereichs abhängt, insbesondere einer ursprünglichen Lichtfleckposition. Hier wird davon ausgegangen, dass es bereits eine anfängliche Vorzugsposition des interessierenden Bereichs gibt, etwa dort, wo ein Lichtsender des Sensors einen Lichtfleck erzeugt. Durch ein abstandsabhängiges Defektmaß werden dann kleinere Veränderungen bevorzugt. Die Abstandsabhängigkeit kann nichtlinear sein und insbesondere größere Veränderungen überproportional bestrafen oder ganz verhindern.

Die Lichtempfangselemente sind bevorzugt als Lawinenphotodiodenelemente im Geiger-Modus ausgebildet. Derartige Lichtempfangselemente, auch als SPADs bezeichnet, wurden einleitend kurz beschrieben und machen den Lichtempfänger besonders empfindlich.

Der Sensor weist bevorzugt eine Vielzahl von Lichtlaufzeitmesseinheiten auf, die veränderbar mit Lichtempfangselementen verbindbar sind, wobei die Auswahl eines interessierenden Bereichs durch die Verbindung zwischen Lichtempfangselementen und Lichtlaufzeitmesseinheiten erfolgt. Hier sind einzelne oder Gruppen der Lichtempfangselemente jeweils mit einer Lichtlaufzeitmesseinheit verbunden, die eine Einzellichtlaufzeit misst. Die Lichtlaufzeitmesseinheiten können beispielsweise einen TDC aufweisen (Time-to-Digital-Converter). Die Einzellichtlaufzeiten werden beispielsweise in einem Speicher gesammelt, und die Steuer- und Auswertungseinheit erzeugt aus den gesammelten Einzellichtlaufzeiten einen Distanzwert. Insgesamt gibt es weniger Lichtlaufzeitmesseinheiten als Lichtempfangselemente. Das bedeutet, dass nur ein Teil oder sogar nur ein kleiner Teil der Lichtempfangselemente mit einer Lichtlaufzeitmesseinheit verbunden ist, und die so ausgewählten Lichtempfangselemente bilden den interessierenden Bereich. Die Auswahl von Lichtempfangselementen beziehungsweise die Zuordnung zu Lichtlaufzeitmesseinheiten erfolgt besonders bevorzugt mittels einer Schaltermatrix. Weitere Details bezüglich der Ausgestaltung von Lichtlaufzeitmesseinheiten, der Lichtlaufzeitmessung sowie der variablen Auswahl und Zuordnung von Lichtempfangselementen zu Lichtlaufzeitmesseinheiten können der einleitend genannten EP 3 428 683 B1 entnommen werden, wobei die Erfindung nur vorzugsweise Eins-zu-Eins-Zuordnungen zwischen Lichtempfangselementen und Lichtlaufzeitmesseinheiten verwendet.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines optoelektronischen Sensors;
- Fig. 2: eine Illustration einer Defektkarte eines Lichtempfängers mit Positionen defekter Lichtempfangselemente;
- Fig. 3: eine Illustration einer ROI-Karte mit einer vorgesehenen Anordnung von Lichtempfangselementen eines interessierenden Bereichs einschließlich einer Pufferzone;
- Fig. 4: eine Illustration einer Faltung einer Defektkarte mit einer ROI-Karte zur Erzeugung einer Überlappungskarte;
- Fig. 5: eine Illustration ähnlich Figur 4, dargestellt ist nur die Faltung einer Defektkarte mit der Pufferzone einer ROI-Karte;
- Fig. 6: eine Illustration einer kombinierten Überlappungskarte;
- Fig. 7: eine Illustration einer mit einem Defektmaß bewerteten Überlappungskarte und einer daraus abgeleiteten neuen Lichtfleckposition;
- Fig. 8: eine Illustration eines interessierenden Bereichs entsprechend der neuen Lichtfleckposition, wobei der interessierende Bereich keine defekten Lichtempfangselemente enthält; und
- Fig. 9: eine vergleichende Darstellung der erhöhten Ausbeute von Sensoren aufgrund der Verschiebung des interessierenden Bereichs unter Vermeidung von defekten Lichtempfangselementen.

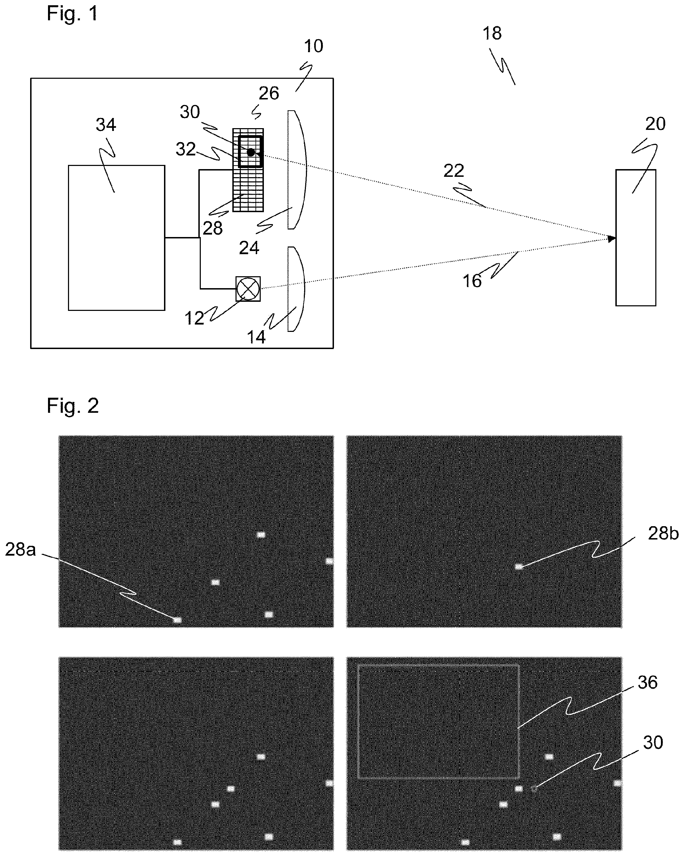

Figur 1 zeigt eine schematische Darstellung eines optoelektronischen Sensors 10. Ein Lichtsender 12, beispielsweise eine LED oder eine Laserlichtquelle, sendet über eine Sendeoptik 14 ein Lichtsignal 16 in einen Erfassungsbereich 18 aus. Trifft das Lichtsignal 16 in dem Erfassungsbereich 18 auf ein Objekt 20, so kehrt ein remittiertes oder reflektiertes Lichtsignal 22 über eine Empfangsoptik 24 zu einem Lichtempfänger 26 zurück. Dieser Lichtempfänger 26 weist eine Vielzahl von Lichtempfangselementen 28 auf, die vorzugsweise als Lawinenphotodiodenelemente im Geigermodus oder SPADs ausgebildet sind und die als Sensorzellen oder Pixel aufgefasst werden können. SPADs liefern praktisch ein Digitalsignal und reagieren somit ausgesprochen schnell auf eintreffendes Licht.

Um auch schwach reflektierende Objekte 20 erfassen zu können und eine hohe Reichweite zu erzielen, wird das optische Frontend mit Sendeoptik 14 und Empfangsoptik 24 so gestaltet, dass möglichst viel Licht auf den Lichtempfänger 26 trifft. Der Lichtfleck, den das auftreffende reflektierte Lichtsignal 22 auf dem Lichtempfänger 26 erzeugt, fällt aber typischerweise nur auf einen Teil der Lichtempfangselemente 28 um die Lichtfleckposition 30 herum. Es sind also in diesem Sinne zu viele Lichtempfangselemente 28 vorhanden. In einer Konfiguration des Sensors 10, vorzugsweise schon bei der Herstellung, werden die passenden Lichtempfangselemente 28 ausgewählt, also vorzugsweise diejenigen, auf die der Lichtfleck fällt. Die ausgewählten Lichtempfangselemente 28 bilden einen interessierenden Bereich 32 (ROI, Region of Interest). Die Signale der übrigen Lichtempfangselemente 28 außerhalb des interessierenden Bereichs 32 werden nicht ausgelesen oder zumindest nicht weiter ausgewertet. Nicht ausgewählte Lichtempfangselemente 28, deren Signale ohnehin nicht genutzt würden, können beispielsweise durch Absenken der Vorspannung unter die Durchbruchspannung ausgeschaltet werden.

Eine Steuer- und Auswertungseinheit 34 ist für die Ansteuerung der diversen Komponenten des Sensors 10 und die Auswertung der Signale der ausgewählten Lichtempfangselemente 28 innerhalb des interessierenden Bereichs 32 zuständig. Die Steuer- und Auswertungseinheit 34 umfasst mindestens eine Recheneinheit. Beispiele dafür sind digitale Rechenbausteine wie ein Mikroprozessor oder eine CPU (Central Processing Unit), ein FPGA (Field Programmable Gate Array), ein DSP (Digital Signal Processor), ein ASIC (Application-Specific Integrated Circuit), ein Kl-Prozessor, eine NPU (Neural Processing Unit), eine GPU (Graphics Processing Unit) oder dergleichen.

In der Auswertung kann lediglich ein binäres Objektsfeststellungssignal gewonnen werden, ob das Lichtsignal 16 ein Objekt 20 getroffen hat oder nicht. Vorzugsweise ist der Sensor 10 in der Lage, die Distanz zu einem angetasteten Objekt 20 mit einem Lichtlaufzeitverfahren zu messen. Das ausgesandte Lichtsignal 16 weist dann bevorzugt einen Lichtpuls auf, so dass der Sensor 10 Entfernungen nach dem Pulsverfahren beziehungsweise einem direkten Lichtlaufzeitverfahren (dToF, direct Time of Flight) bestimmt. Aus der Lichtlaufzeit zwischen Aussenden eines Lichtsignals 16 und Empfang des zugehörigen reflektierten Lichtsignals 22 kann unter Verwendung der Lichtgeschwindigkeit auf den Abstand des Objekts 20 geschlossen werden.

In einer bevorzugten statistischen Auswertung werden mit den ausgewählten Lichtempfangselementen 28 des interessierenden Bereichs 32 jeweils Einzellichtlaufzeiten bestimmt und diese beispielsweise in einem Histogramm akkumuliert. Für die Bestimmung von Einzellichtlaufzeiten kann eine Vielzahl von Lichtlaufzeitmesseinheiten vorgesehen sein, insbesondere TDCs (Time-to-Digital Converter). In diesem Zusammenhang ergibt sich eine vorteilhafte spezielle Form der Auswahl des interessierenden Bereichs 32 durch die Zuordnung von ausgewählten Lichtempfangselementen 28 zu einer begrenzten Anzahl von Lichtlaufzeitmesseinheiten. Hierzu wird ergänzend auf die einleitend genannte EP 3 428 683 B1 verwiesen. Die Steuer- und Auswertungseinheit 34 ist vorzugsweise dafür ausgebildet, Histogramme aus Einzellichtlaufzeiten weiterzuverarbeiten und beispielsweise einen von dem reflektierten Lichtsignal 22 verursachten Peak zu lokalisieren, der dem Empfangszeitpunkt entspricht. Es ist denkbar, zumindest einige oder Teile der Lichtlaufzeitmesseinheiten und/oder Funktionsblöcke der Steuer- und Auswertungseinheit 34 mit den Lichtempfangselementen 28 auf einem gemeinsamen Chip zu integrieren (z.B. ASIC, Application-Specific Integrated Circuit).

Die Anordnung des Sensors 10 in Figur 1 ist rein beispielhaft zu verstehen. Es sind alternativ andere bekannte optische Lösungen einsetzbar, wie Autokollimation etwa mit einem Strahlteiler und einer gemeinsamen Optik oder die Anordnung des Lichtsenders 12 vor dem Lichtempfänger 26. Auch komplexere Sensoren wie Lichtgitter oder Laserscanner sind denkbar.

In einem realen Lichtempfänger 26 tritt regelmäßig der Fall auf, dass zumindest einzelne der Lichtempfangselemente 28 defekt sind. Erfindungsgemäß wird der interessierende Bereich 32 so festgelegt, dass sich darin keine defekten Lichtempfangselemente 28 oder nur eine begrenzte Anzahl defekter Lichtempfangselemente 28 befinden. Diese Festlegung des interessierenden Bereichs 32 erfolgt vorzugsweise im Herstellungsprozess. Bevor dies im Anschluss unter Bezugnahme auf die Figuren 2 bis 8 an einem beispielhaften Vorgehen im Detail beschrieben wird, soll ein kurzer Überblick gegeben werden.

Als Ausgangslage beziehungsweise Eingangsparameter für die Optimierung des interessierenden Bereichs 32 hinsichtlich defekter Lichtempfangselemente 28 werden zum einen die defekten Lichtempfangselemente 28 ermittelt, beispielsweise während der Erfassung eines bekannten Referenzobjekts, das Erwartungshaltungen für die einzelnen Lichtempfangselemente 28 liefert, mit denen verglichen werden kann, um Defekte aufzufinden. Als Referenzobjekt gilt vorzugsweise auch eine definierte Ausleuchtung beziehungsweise Dunkelheit im Erfassungsbereich 18. Außerdem wird ein Muster des gewünschten interessierenden Bereichs 32 vorgegeben, sei es durch Parametrierung, eine Konfigurationssoftware oder auch durch algorithmisches Vorgehen beziehungsweise Vermessung von Lichtflecken in mehreren Abständen.

Es ist denkbar, den interessierenden Bereich 32 überhaupt erst in der geeigneten Lage zu definieren. Im Folgenden wird jedoch ohne Beschränkung der Allgemeinheit davon ausgegangen, dass es bereits einen anfänglichen interessierenden Bereich 32 gibt, der noch ohne Rücksicht auf defekte Lichtempfangselemente 28 festgelegt ist. Das lässt sich einfach durch Festlegung irgendeiner ursprünglichen Lage erreichen. Insbesondere besteht für die Lage des interessierenden Bereichs 32 keine Wahlfreiheit, wenn damit ein von dem reflektierten Lichtsignal 22 erzeugter Lichtfleck erfasst werden soll, der eine durch die baulichen Gegebenheiten festgelegte Lichtfleckposition 30 einnimmt. Zu den genannten Eingangsparametern zählt dann auch die ursprüngliche Lage des noch nicht optimierten interessierenden Bereichs 32 beziehungsweise die Lichtfleckposition 30.

Als optionale Parameter können noch eine maximal zulässige Verschiebung des interessierenden Bereichs 32 aus der ursprünglichen Lage, ein bestimmter auszunutzender Teilbereich des Lichtempfängers 26 und/oder eine Anzahl an erlaubten defekten Lichtempfangselementen 28 vorgegeben werden.

Mit dem erfindungsgemäßen Verfahren wird dann eine neue Position des interessierenden Bereichs 32 beziehungsweise eine zu deren Erreichen erforderliche Verschiebung bestimmt, so dass höchstens die erlaubte Anzahl defekter Lichtempfangselemente 28 in dem neuen interessierenden Bereich 32 liegt. Dabei kann eine Toleranz oder Pufferzone berücksichtigt werden, für den Fall, dass die neue Position praktisch nicht ideal erreicht wird. Sofern der interessierende Bereich 32 die Lichtfleckposition 30 enthalten soll, muss diese entsprechend der neuen Position verändert werden. Dazu können der Lichtsender 12, die Sendeoptik 14, die Empfangsoptik 24 und/oder der Lichtempfänger 26 mechanisch bewegt, d.h. verschoben und/oder verkippt werden, beispielsweise über geeignete Greifer während der Herstellung in der Justage, bevor die Komponenten beispielsweise mit einem Klebeprozess fixiert werden. Der interessierende Bereich 32 lässt sich üblicherweise durch Veränderung einer variablen Verschaltung wie im Falle der EP 3 428 683 B1, durch eine entsprechende sonstige Ansteuerung oder lediglich durch eine veränderte Auswertung sehr einfach und ohne mechanischen Eingriff verändern und an die neue Lichtfleckposition 30 anpassen.

Figur 2 zeigt eine Illustration einer Defektkarte des Lichtempfängers 26. Die Defektkarte ist eine Matrix entsprechend der Matrix des Lichtempfängers 26 mit hervorgehobenen Positionen defekter Lichtempfangselemente 28. Etwas genauer ist oben links eine Teilkarte mit Lichtempfangselementen 28a zu hoher Empfindlichkeit ("Screamer"), oben rechts eine Teilkarte mit Lichtempfangselementen 28b zu geringer Empfindlichkeit oder ohne Signal ("Dark Pixel"), unten links eine Überlagerung der beiden Teilkarten und unten rechts die Überlagerung mit weiteren Informationen gezeigt, nämlich der bisherigen Lichtfleckposition 30 und einem vorgegebenen Zielbereich 36 für den interessierenden Bereich 32.

Die defekten Lichtempfangselemente 28a-b werden vorzugsweise ermittelt, indem ein Referenzobjekt in dem Erfassungsbereich 18 angeordnet wird und die Signale der Lichtempfangselemente 28 mit einer Erwartungshaltung verglichen werden, die vorgegeben oder beispielsweise aus einer jeweiligen Nachbarschaft abgeleitet werden. Als Referenzobjekt kann auch aufgefasst werden, wenn der Lichtempfänger 26 definiert beleuchtet, insbesondere durch Ausleuchten des Erfassungsbereichs 18 oder völlige Dunkelheit. Die bisherige Lichtfleckposition 30 kann als ursprüngliche Lage eines interessierenden Bereichs 32 aufgefasst werden, beispielsweise dessen Zentrum markieren. Der Zielbereich 36 legt eine gewünschte Position für den interessierenden Bereich 32 fest, was dem oben genannten optionalen Parameter eines bestimmten auszunutzenden Teilbereichs des Lichtempfängers 26 entspricht.

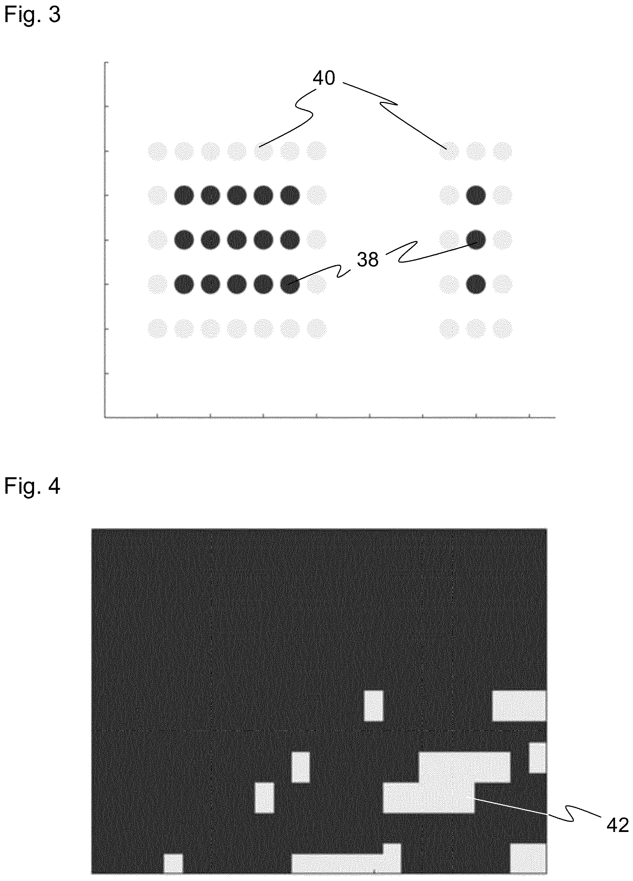

Figur 3 zeigt eine Illustration einer ROI-Karte mit einer vorgesehenen Anordnung von Positionen 38 für die Lichtempfangselemente 28 des interessierenden Bereichs 32. Die ROI-Karte ist demnach eine geometrische Formvorgabe für den interessierenden Bereich 32, dessen optimierte Position noch festzulegen ist. Die dargestellte Form eines Rechtecks ist rein beispielhaft, die ROI-Karte kann eine beliebige Form vorgeben, wobei zur Illustration der Variationsmöglichkeiten zwei separierte Rechtecke gezeigt sind.

Vorzugsweise umfasst die ROI-Karte eine Pufferzone mit in Figur 3 heller dargestellten weiteren Positionen 40 für Lichtempfangselemente 28. Die Pufferzone dient dem Ausgleich von Toleranzen bei der abschließenden Verschiebung der Lichtfleckposition 30 beziehungsweise des interessierenden Bereichs 32 in die aufgefundene optimale Lage, beispielsweise Toleranzen eines Klebeprozesses oder einer sonstigen Fixierung. Mit der Pufferzone wird optional dafür gesorgt, dass ein leicht gegen die optimale Lage versetzter interessierender Bereich 32 keine oder nur eine maximale Anzahl defekter Lichtempfangselemente 28 aufweist, solange der Versatz innerhalb der Pufferzone bleibt. Eine breitere Pufferzone fängt größere Toleranzen auf, erschwert es aber, für den um die Pufferzone vergrößerten interessierenden Bereich 32 eine passende Lage ohne defekte Lichtempfangselemente 28 zu finden, so dass hier eine Abwägung erfolgen sollte. Es ist möglich, defekte Lichtempfangselemente 28 in der Pufferzone bei der Bewertung zum Auffinden einer optimalen Lage geringer zu gewichten als im eigentlichen interessierenden Bereich 32.

Figur 4 zeigt eine Illustration einer Faltung der Defektkarte gemäß Figur 2 mit der ROI-Karte gemäß Figur 3. Das Ergebnis ist eine Überlappungskarte. Darin sind Positionen 42 hervorgehoben, an denen es zu einer Überlappung kommt und vorzugsweise zu welchem Grad. Mit anderen Worten befinden sich defekte Lichtempfangselemente 28 innerhalb eines an diese Positionen 42 verschobenen interessierenden Bereichs 32. Die Pufferzone der Figur 3 bleibt in Figur 4 unberücksichtigt.

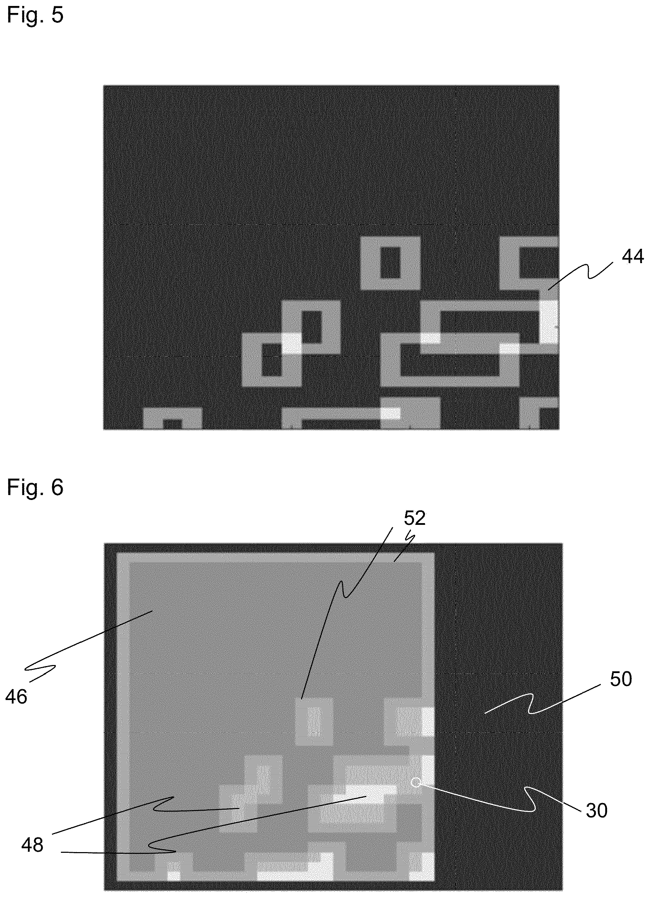

Figur 5 zeigt eine Illustration ähnlich Figur 4, dargestellt ist hier die Faltung einer Defektkarte gemäß Figur 2 mit nur der Pufferzone der ROI-Karte gemäß Figur 3. Es befinden sich demnach defekte Lichtempfangselemente 28 innerhalb der Pufferzone eines an die hier hervorgehobenen Positionen 44 verschobenen interessierenden Bereichs 32.

Figur 6 zeigt eine Illustration einer kombinierten Überlappungskarte, d.h. eine Überlagerung der Überlappungskarten gemäß Figur 4 und 5 und zudem auf die Lichtfleckposition 30 bezogen. Die getrennte Faltung des eigentlichen interessierenden Bereichs 32 und der Pufferzone mit anschließender Kombination dient vor allem der Veranschaulichung.

Es ist ebenso eine gemeinsame Faltung möglich, wobei in der Faltung unterschiedliche Gewichte für die jeweilige Bedeutung beispielsweise der Pufferzone berücksichtigt werden können.

In der kombinierten Überlappungskarte der Figur 6 gibt es einen geeigneten Bereich 46 mit guten Positionen, an denen weder der interessierende Bereich 32 noch dessen Pufferzone ein defektes Lichtempfangselement 28 einschließen würde. In den nicht geeigneten Bereichen 48 hingegen würde mindestens ein defektes Lichtempfangselement 28 in den interessierenden Bereich 32 fallen. An Positionen in dem nicht erlaubten Bereich 50 würde der interessierende Bereich 32 schlicht nicht mehr vollständig auf dem Lichtempfänger 26 liegen. An Positionen der Randbereiche 52 würde die Pufferzone entweder mindestens ein defektes Lichtempfangselement 28 enthalten oder nicht vollständig auf dem Lichtempfänger 26 passen.

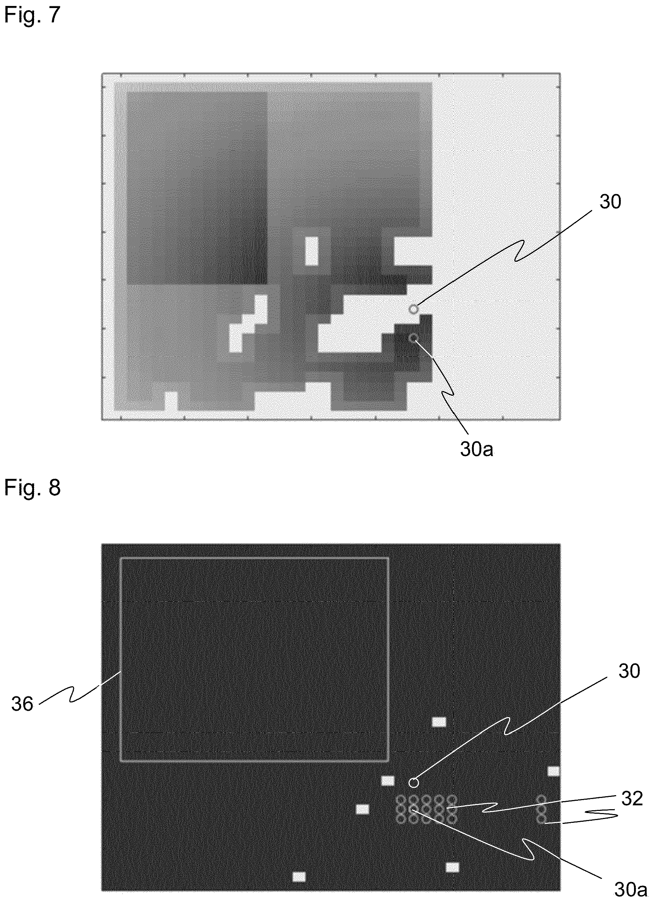

Figur 7 zeigt das Ergebnis einer Bewertung der kombinierten Überlappungskarte gemäß Figur 6, was als eine Karte mit einem Defektmaß aufgefasst werden kann. Das Defektmaß ist hell für nicht erlaubte beziehungsweise ungeeignete Positionen und zunehmend dunkel für besonders geeignete Positionen. Zusätzlich zu den Wertungen, die schon zu Figur 6 eingeführt wurden, kann das Defektmaß einen Abstand zu der ursprünglichen Lichtfleckposition 30 einbeziehen und/oder berücksichtigen, ob die Position innerhalb des vorgegebenen Zielbereichs 36 liegt oder nicht. Weitere durch Benutzervorgaben eingeführte Wertungskriterien sind denkbar.

In dem Beispiel der Figur 7 gibt es eine Vielzahl geeigneter (dunkler) Positionen, an denen weder in dem interessierenden Bereich 32 noch in dessen Pufferzone defekte Lichtempfangselemente 28 liegen würden. Darunter wird die neue Lichtfleckposition 30a deshalb ausgewählt, weil sie der geringsten Verschiebung bedarf. Sofern die Lichtfleckposition beliebig verschieblich ist, kann eine abstandsabhängige Gewichtung entfallen, es besteht dann eine entsprechende Wahlfreiheit für die neue Position des interessierenden Bereichs 32.

In Figur 7 links oben ergibt sich ein dunkles Rechteck mit besonders geeigneten Positionen, in denen das Defektmaß wegen des vorgegebenen Zielbereichs 36 verbessert wird, oder gleichbedeutend werden alle Positionen außerhalb des Zielbereichs 36 in dem Defektmaß entsprechend bestraft. Wegen des großen Abstands zu der ursprünglichen Lichtfleckposition 30 setzt sich jedoch der hier vergleichsweise klein vorgegebene Vorteil des Zielbereichs 36 gegenüber der nahen neuen Lichtfleckposition 30a nicht durch.

Figur 8 zeigt das Ergebnis nochmals in der ursprünglichen Defektkarte, die unten rechts in Figur 2 dargestellt ist. Der interessierende Bereich 32 wird an die neue Lichtfleckposition 30a verschoben und enthält hier keine defekten Lichtempfangselemente 28. Die Verschiebung des Lichtflecks wird, wie oben schon erläutert, durch mechanische Manipulation insbesondere während der Herstellung erreicht. Der interessierende Bereich 32 kann noch an die tatsächlich erreichte Lichtfleckposition 30a angepasst oder überhaupt erst abschließend festgelegt werden, um etwaige Toleranzen auszugleichen.

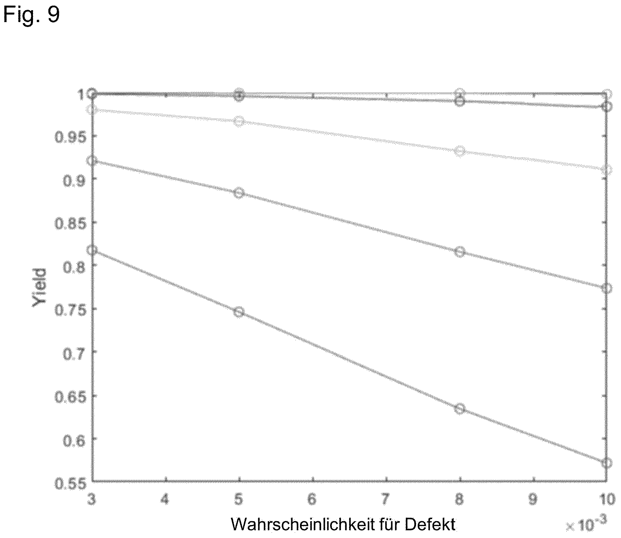

Figur 9 zeigt abschließend eine vergleichende Darstellung der erhöhten Ausbeute von Sensoren 10 dank der Verschiebung des interessierenden Bereichs 32 unter Vermeidung von defekten Lichtempfangselementen 28. Dabei sind auf der X-Achse die Wahrscheinlichkeit eines Defekts je Lichtempfangselement 28 und auf der Y-Achse die Ausbeute aufgetragen. Die unterschiedlichen Messkurven entsprechen, von unten nach oben, einer erlaubten Verschiebung um null bis vier Lichtempfangselemente 28 auf dem Lichtempfänger 26. Die unterste Messkurve entspricht demnach dem Stand der Technik ohne optimierte Lage des interessierenden Bereichs 32. Bei der obersten Messkurve mit einer erlaubten Verschiebung von vier gibt es bereits so gut wie keine Ausfälle mehr, dies lässt sich mit noch flexiblerer Verschiebung weiter verbessern.

Als Rahmenbedingung ist in diesem Beispiel angenommen, dass der interessierende Bereich 32 insgesamt 18 Lichtempfangselemente 28 umfasst. Die Wahrscheinlichkeit, dass bei zufälliger Auswahl keines davon defekt ist, beträgt lediglich 88-92%. Würde ein Defekt toleriert, so steigt diese Wahrscheinlichkeit auf über 99%, aber das defekte Lichtempfangselement 28 in dem interessierenden Bereich 32 hätte bereits Auswirkungen auf die Leistungsfähigkeit des Sensors 10. Die Erfindung ermöglicht fast immer, den interessierenden Bereich 32 ohne defektes Lichtempfangselement 28 auszuwählen, und es muss daher keine Einbuße hinsichtlich Ausbeute oder Leistungsfähigkeit hingenommen werden.

In dem beschriebenen Verfahren kann bereits eine Pufferzone berücksichtigt werden, um Fertigungstoleranzen aufzufangen. Es ist möglich, auch andere Effekte mit dem anhand der Figuren 2 bis 8 beschrieben Vorgehen zu berücksichtigen, etwa Temperaturveränderungen, Abschattungen, das Einhalten vordefinierter (Schiel-)winkel und dergleichen.

## Patentansprüche

1. Verfahren zur Konfiguration eines optoelektronischen Sensors (10), der einen Lichtempfänger (26) mit einer Vielzahl von Lichtempfangselementen (28) sowie eine Steuer- und Auswertungseinheit (34) aufweist, wobei ein interessierender Bereich (32, ROI, region of interest) mit nur einem Teil der Lichtempfangselemente (28) ausgewählt wird und die Steuer- und Auswertungseinheit (34) nach der Konfiguration nur Informationen von Lichtempfangselementen (28) des interessierenden Bereichs (32) auswertet, wobei defekte Lichtempfangselemente (28) ermittelt werden und dass der interessierende Bereich (32) derart ausgewählt wird, dass der interessierende Bereich (32) höchstens eine Höchstanzahl von defekten Lichtempfangselementen (28) umfasst,
**dadurch gekennzeichnet,**
**dass** aus den ermittelten defekten Lichtempfangselementen (28a-b) eine Defektkarte des Lichtempfängers (26) mit hervorgehobenen Positionen der defekten Lichtempfangselemente (28a-b) erzeugt wird und die Defektkarte mit einer ROI-Karte entsprechend einer Form des interessierenden Bereichs (32) zu einer Überlappungskarte gefaltet wird.

2. Verfahren nach Anspruch 1,
wobei die Auswahl des interessierenden Bereichs (32) im Rahmen der Herstellung des Sensors (10) erfolgt.

3. Verfahren nach Anspruch 1 oder 2,
wobei die defekten Lichtempfangselemente (28) während der Erfassung eines Referenzobjekts mit dem Sensor (10) ermittelt werden.

4. Verfahren nach einem der vorhergehenden Ansprüche,
wobei der Sensor (10) einen Lichtsender (12) aufweist, dessen Sendelicht (16) einen Lichtfleck auf dem Lichtempfänger (26) erzeugt, und wobei der interessierende Bereich (32) so ausgewählt wird, dass der Lichtfleck auf Lichtempfangselemente (28) des interessierenden Bereichs (32) fällt.

5. Verfahren nach Anspruch 4,
wobei eine Lichtfleckposition (30) auf dem Lichtempfänger (26) verschoben wird, indem der Lichtsender (12), eine Sendeoptik (14) des Lichtsenders (12), der Lichtempfänger (26) und/oder eine Empfangsoptik (24) des Lichtempfängers (26) bewegt wird.

6. Verfahren nach einem der vorhergehenden Ansprüche,
wobei die ROI-Karte eine Pufferzone um den interessierenden Bereich (32) aufweist.

7. Verfahren nach einem der vorhergehenden Ansprüche,
wobei Positionen der Überlappungskarte mit einem Defektmaß bewertet werden, wobei das Defektmaß einen Wert je nach Überlappung der ROI-Karte mit defekten Lichtempfangselementen (28a-b) annimmt.

8. Verfahren nach Anspruch 7,
wobei der interessierende Bereich (32) so ausgewählt wird, dass das Defektmaß für die Positionen der Lichtempfangselemente (28) des interessierenden Bereichs (32) ein Höchstdefektmaß nicht überschreitet.

9. Verfahren nach Anspruch 8 oder 9,
wobei das Defektmaß an Positionen innerhalb eines vorgegebenen Bereichs (36) des Lichtempfängers (26) herabgesetzt ist.

10. Verfahren nach einem der Ansprüche 7 bis 9,
wobei das Defektmaß einen Anteil aufweist, der von einem Abstand der jeweils mit dem Defektmaß bewerteten Position zu einer Ursprungsposition des interessierenden Bereichs (32) abhängt, insbesondere einer ursprünglichen Lichtfleckposition (30).

11. Verfahren nach einem der Ansprüche 1 bis 6,
wobei der interessierende Bereich (32) derart ausgewählt wird, dass der interessierende Bereich (32) keine defekten Lichtempfangselemente (28) umfasst.

12. Verfahren nach einem der vorhergehenden Ansprüche,
wobei die Lichtempfangselemente (28) als Lawinenphotodiodenelemente im Geiger-Modus ausgebildet sind.

13. Verfahren nach einem der vorhergehenden Ansprüche,
wobei der Sensor (10) eine Vielzahl von Lichtlaufzeitmesseinheiten aufweist, die veränderbar mit Lichtempfangselementen (28) verbindbar sind, und wobei die Auswahl eines interessierenden Bereichs (32) durch die Verbindung zwischen Lichtempfangselementen (28) und Lichtlaufzeitmesseinheiten erfolgt.

## Claims

1. A method of configuring an optoelectronic sensor (10) that has a light receiver (26) having a plurality of light reception elements (28) and that has a control and evaluation unit (34), wherein a region of interest (32, ROI) having only some of the light reception elements (28) is selected and the control and, after the configuration, the evaluation unit (34) only evaluates information from light reception elements (28) of the region of interest (32) and wherein defective light reception elements (28) are determined and the region of interest (32) is selected such that the region of interest (32) comprises at most a maximum number of defective light reception elements (28),
**characterized in that**
a defect map of the light receiver (26) having highlighted positions of the defective light reception elements (28a-b) is generated from the determined defective light reception elements (28a-b); and **in that** the defect map is folded together with an ROI map corresponding to a shape of the region of interest (32) to form an overlap map.

2. A method in accordance with claim 1,
wherein the selection of the region of interest (32) takes place as part of the manufacture of the sensor (10).

3. A method in accordance with claim 1 or claim 2,
wherein the defective light reception elements (28) are determined during the detection of a reference object by the sensor (10).

4. A method in accordance with any one of the preceding claims,
wherein the sensor (10) has a light transmitter (12) whose transmitted light generates a light spot on the light receiver (26) and wherein the region of interest (32) is selected such that the light spot is incident on light reception elements (28) of the region of interest (32).

5. A method in accordance with claim 4,
wherein a light spot position (30) on the light receiver (26) is displaced in that the light transmitter (12), a transmission optics (14) of the light transmitter (12), the light receiver (26), and/or a reception optics (24) of the light receiver (26) are moved.

6. A method in accordance with any one of the preceding claims,
wherein the **ROI** map has a buffer zone about the region of interest (32).

7. A method in accordance with any one of the preceding claims,
wherein positions of the overlap map are evaluated by a defect measure, wherein the defect measure adopts a value depending on the overlap of the **ROI** map with defective light reception elements (28a-b).

8. A method in accordance with claim 7,
wherein the region of interest (32) is selected such that the defect measure for the positions of the light reception elements (28) of the region of interest (32) does not exceed a maximum defect measure.

9. A method in accordance with claim 7 or claim 8,
wherein the defect measure is reduced at positions within a predefined region (36) of the light receiver (26).

10. A method in accordance with any one of the claims 7 to 9,
wherein the defect measure has a portion that depends on a distance of the respective position evaluated by the defect measure from an origin position of the respective (32), in particular from an original light spot position (30).

11. A method in accordance with any one of the claims 1 to 6,
wherein the region of interest (32) is selected such that the region of interest (32) does not comprise any defective light reception elements (28).

12. A method in accordance with any one of the preceding claims,
wherein the light reception elements (28) are configured as Geiger mode avalanche photodiode elements.

13. A method in accordance with any one of the preceding claims,
wherein the sensor (10) has a plurality of time of flight measurement units that are changeably connectable to light reception elements (28) and wherein the selection of a region of interest (32) takes place by the connection between the light reception elements (28) and the time of flight measurement units.

## Revendications

1. Procédé de configuration d'un capteur optoélectronique (10) comprenant un récepteur de lumière (26), muni d'une pluralité d'éléments récepteurs de lumière (28), ainsi qu'une unité de commande et d'évaluation (34), dans lequel une zone d'intérêt (32, **ROI,** region of interest) est sélectionnée, laquelle présente seulement une partie des éléments récepteurs de lumière (28), et, après la configuration, l'unité de commande et d'évaluation (34) n'évalue que des informations d'éléments récepteurs de lumière (28) de la zone d'intérêt (32), des éléments récepteurs de lumière (28) défectueux sont déterminés, et la zone d'intérêt (32) est sélectionnée de telle sorte que la zone d'intérêt (32) présente au maximum un nombre maximal d'éléments récepteurs de lumière (28) défectueux,
**caractérisé en ce que**
à partir des éléments récepteurs de lumière (28a-b) défectueux déterminés, une carte des défauts du récepteur de lumière (26) avec des positions mises en évidence des éléments récepteurs de lumière (28a-b) défectueux est générée, et la carte des défauts est pliée avec une carte **ROI** correspondant à une forme de la zone d'intérêt (32) pour donner une carte de chevauchement.

2. Procédé selon la revendication 1,
la sélection de la zone d'intérêt (32) se fait lors de la fabrication du capteur (10).

3. Procédé selon la revendication 1 ou 2,
dans lequel les éléments récepteurs de lumière (28) défectueux sont déterminés pendant l'acquisition d'un objet de référence avec le capteur (10).

4. Procédé selon l'une des revendications précédentes,
dans lequel le capteur (10) comprend un émetteur de lumière (12) dont la lumière d'émission (16) produit un spot lumineux sur le récepteur de lumière (26), et la zone d'intérêt (32) est sélectionnée de manière à ce que le spot lumineux tombe sur les éléments récepteurs de lumière (28) de la zone d'intérêt (32).

5. Procédé selon la revendication 4,
dans lequel une position (30) du spot lumineux sur le récepteur de lumière (26) est déplacée par déplacement de l'émetteur de lumière (12), d'une optique d'émission (14) de l'émetteur de lumière (12), du récepteur de lumière (26) et/ou d'une optique de réception (24) du récepteur de lumière (26).

6. Procédé selon l'une des revendications précédentes,
dans lequel la carte ROI comprend une zone tampon autour de la zone d'intérêt (32).

7. Procédé selon l'une des revendications précédentes,
dans lequel des positions de la carte de chevauchement sont évaluées avec une mesure de défauts, la mesure de défauts prenant une valeur en fonction du chevauchement de la carte ROI avec des éléments récepteurs de lumière (28a-b) défectueux.

8. Procédé selon la revendication 7,
dans lequel la zone d'intérêt (32) est sélectionnée de sorte que la mesure de défauts pour les positions des éléments récepteurs de lumière (28) de la zone d'intérêt (32) ne dépasse pas une mesure de défauts maximale.

9. Procédé selon la revendication 7 ou 8,
dans lequel la mesure de défauts est réduite pour des positions situées à l'intérieur d'une zone prédéterminée (36) du récepteur de lumière (26).

10. Procédé selon l'une des revendications 7 à 9,
dans lequel la mesure de défauts présente une part qui dépend d'une distance entre la position respective évaluée avec la mesure de défauts et une position d'origine de la zone d'intérêt (32), en particulier une position d'origine (30) du spot lumineux.

11. Procédé selon l'une des revendications 1 à 6,
dans lequel la zone d'intérêt (32) est sélectionnée de telle sorte que la zone d'intérêt (32) ne présente pas d'éléments récepteurs de lumière (28) défectueux.

12. Procédé selon l'une des revendications précédentes,
dans lequel les éléments récepteurs de lumière (28) sont réalisés comme des éléments photodiodes à avalanche en mode Geiger.

13. Procédé selon l'une des revendications précédentes,
dans lequel le capteur (10) comprend une pluralité d'unités de mesure du temps de vol de la lumière qui peuvent être reliées de manière variable à des éléments récepteurs de lumière (28), et la sélection d'une zone d'intérêt (32) est effectuée par la liaison entre les éléments récepteurs de lumière (28) et les unités de mesure du temps de vol de la lumière.
